# EUROPEAN PATENT APPLICATION

(11) **EP 4 230 680 A1**
(43) Date of publication of application: **23.08.2023**
(21) Application number: 22461504.7
(22) Date of filing: 18.02.2022
(51) Int. Cl.: C08G 65/26, C08G 18/48, C08G 65/30

(54) **A PROCESS FOR OBTAINING A POLYETHER POLYOL WITH A BIMODAL MOLECULAR WEIGHT
DISTRIBUTION, FOR THE PRODUCTION OF FLEXIBLE POLYURETHANE FOAMS**

(71) Applicant: PCC ROKITA Spolka Akcyjna, 56-120 Brzeg Dolny (PL)
(72) Inventor: WACEK, Jerzy, 56-120 Brzeg Dolny (PL); WOJDYLA, Henryk, 56-100 Wolow (PL)
(74) Representative: AOMB Polska Sp. z.o.o.

(57) **Abstract**

The invention relates to a process for obtaining a polyether polyol with a bimodal molecular weight distribution, intended for the production of flexible polyurethane foams, in particular of soft, hypersoft and thermoplastic types. The process according to the invention comprises two successive steps, wherein in the first step, the polyaddition of alkylene oxides to a starter is carried out in the presence of a catalyst, and in the second step, the polyaddition of alkylene oxides to a mixture of the polymer formed in the first step and a second portion of the starter is carried out, also in the presence of a catalyst. Furthermore, the invention relates to a polyether polyol with a bimodal molecular weight distribution and its use in the production of soft-, hypersoft- and thermoplastic-type flexible polyurethane foams.

## Description

### Field of the Invention

The invention relates to a process for obtaining a polyether polyol with a bimodal molecular weight distribution, intended for the production of flexible polyurethane foams, in particular of soft, hypersoft and thermoplastic types. Furthermore, the invention relates to a polyether polyol with a bimodal molecular weight distribution and its use in the production of flexible polyurethane foams, including in particular of soft, hypersoft and thermoplastic types.

### State of the Art

Polymer molecular weights (MW) and molecular weight distribution (MWD) are important criteria affecting the physical and mechanical properties of polymers. Control over MW and MWD allows the polymer architecture to be adapted to meet requirements on processability and properties.

From US2021147661 (A1), a process is known for obtaining ethylene polymers capable of having a higher molecular weight (HMW) component and a lower molecular weight (LMW) component, wherein the ratio of short chain branches (SCB) per 1000 total carbon atoms at number average molecular weight (Mn) of the higher molecular weight (HMW) component to the lower molecular weight (LMW) component, wherein the ratio of short chain branches (SCB) per 1000 total carbon atoms at Mn of the LMW component is from 10.5 to 22. These ethylene polymers are produced using a dual catalytic system.

EP 2930205, on the other hand, shows a process for producing polyethylene consisting of:
(i) 20-70% by weight of low molecular weight polyethylene having a weight average molecular weight (Mw) in the range of 5 000 to 150 000 g/mol;
(ii) 20-70% by weight of a first ethylene copolymer having a higher molecular weight, Mw in the range of 100 000 to 1 000 000 g/mol; and
(iii) 0,5-9,5% by weight of a second ethylene copolymer having a higher molecular weight, Mw in the range of 100 000 to 3 000 000 g/mol,
wherein the said second ethylene copolymer has a higher average molecular weight than the said first ethylene copolymer with a higher molecular weight, and the process comprises successive steps in three successive reactors using a Ziegler-Natta catalyst and is carried out as a semi-continuous or continuous polymerisation.

US 5068280 describes the preparation of polyurethane and/or polyurea dispersions by reacting certain coreactants with a polyisocyanate in the presence of a pre-formed polyurethane and/or polyurea dispersion. The so obtained products are particularly useful for producing flexible polyurethane foams that exhibit low shrinkage. In addition, polyurethane and/or polyurea dispersions have a bimodal particle distribution.

In Journal of Polymer Research (2019) 26: 75 (*Characterization of new polyether-diols with different molar masses and modality prepared by ring opening polymerization of oxiranes initiated with anhydrous potassium hydroxide)* ,characterisation of new polyether-diols obtained by ring-opening polymerisation of mono-substituted oxiranes in the presence of solid KOH is presented. All polymerisations were carried out in tetrahydrofuran solution at room temperature. The authors conclude that in the polymerisation of butylene oxide, initiated by solid KOH, there are two alkoxy centres of different reactivities responsible for the bimodality of the polymer.

US9115246B2 describes a process for obtaining polyether polyols, in which at least one fatty acid ester containing hydroxyl groups is reacted with ethylene oxide and/or another alkylene oxide in the presence of a double metal cyanide catalyst (DMC) such as zinc hexacyanocobaltate (III), wherein successive portions of alkylene oxides are added sequentially to the reaction system, but the initiator is introduced into the system once at the beginning of the process. As a result of this process, polyether polyols are obtained with a variable polymer chain structure which, however, does not exhibit a bimodal structure.

In turn, EP0879259B1 discloses a process for producing polyether polyols by polymerising an epoxy in the presence of a double metal cyanide catalyst (DMC), a starter "Sc" added continuously, and a starter "Si" added once at the beginning of the process, wherein "Sc" is used in an amount of at least 2 equivalent % of the total amount of the starter, and the epoxy and "Sc" are added continuously to the reactor during polymerisation.

### Summary of the Invention

In a first aspect, an object of the invention is a process for obtaining a polyether polyol having a bimodal molecular weight distribution, comprising the following steps:
(a) carrying out in a reactor polyaddition of at least one alkylene oxide selected from ethylene oxide and propylene oxide to a starter, which is a triol or a mixture of triols, in the presence of a catalyst which is an alkali metal hydroxide or its alkoxide, to obtain the polymer,
(b) digesting and degassing of the reactor,
(c) introducing, into the same reactor, a second portion of the starter, catalyst and at least one alkylene oxide and carrying out the polyaddition of this at least one alkylene oxide to the polymer mixture obtained in step (a) and the second portion of the starter.

Preferably, the polyether polyol obtained in step (c) is then purified from catalyst ions in step (d). In a particularly preferable variant of implementing the process according to the invention, the purification in step (d) comprises the following steps:
(d1) neutralising the crude polyether polyol obtained in step (c) by addition, to the post-reaction mixture, of acid disodium pyrophosphate (Na₂H₂P₂O₇) and water
(d2) lowering the water content in the mixture obtained in step (d1) to less than 0.1% by weight by distillation under reduced pressure
(d3) removing the crystals of alkali metal salts from the mixture obtained in step (d2) by filtration in a pressure filter to obtain a polyether polyol having an alkali metal ions content not higher than 5 ppm.

Preferably, the starter is selected from glycerol and trimethylpropane (TMP) or a mixture thereof.

Preferably, the catalyst is selected from NaOH, KOH, CsOH or their alkoxides.

In one preferable variant of implementing the process according to the invention, before step (a) a mixture of the starter and the catalyst is prepared by stirring the components at a temperature of 100-130°C for 1-5 h under an inert gas atmosphere and then by removing water to a content below 0.05% by weight.

Preferably, in total, in steps (a) and (c), the catalyst is used in an amount of 1000-5000 ppm, preferably in an amount of 2000-3000 ppm.

In a second aspect, an object of the invention is a polyether polyol having a bimodal molecular weight distribution obtainable in the process described above.

Preferably, the polyether polyol according to the invention has a weight average molecular weight of 4000 - 6000 Da and contains from 60 to 85% by weight of ethylene oxide.

In a third aspect, an object of the invention is the use of a polyether polyol having a bimodal molecular weight distribution according to the invention for producing soft-type flexible polyurethane foams, wherein the said polyether polyol is used in an amount of 0.5 to 15 parts by weight per 100 parts by weight of all polyols in the soft-type foam formulation. Soft-type flexible polyurethane (T) foams typically include foams with an apparent density of 18 kg/m3 to 80 kg/m3, a hardness of 2.0 kPa to 15 kPa, a resilience of over 30%, a tensile strength of over 70 kPa and an elongation strength of over 70%.

In a fourth aspect, an object of the invention is the use of a polyether polyol having a bimodal molecular weight distribution according to the invention for producing hypersoft-type flexible polyurethane foams, wherein the said polyether polyol is used in an amount of 70 to 85 parts by weight per 100 parts by weight of all polyols in the hypersoft-type foam formulation. Hypersoft-type (HS) flexible polyurethane foams typically include foams with an apparent density of 21 kg/m³ to 50 kg/m³, a hardness of 0.8 kPa to 3.0 kPa, a resilience of over 40%, a tensile strength of over 80 kPa and an elongation strength of over 200%.

In a fifth aspect, an object of the invention is the use of a polyether polyol having a bimodal molecular weight distribution according to the invention for producing thermoplastic-type flexible polyurethane foams, wherein the said polyether polyol is used in an amount of 3 to 55 parts by weight per 100 parts by weight of all polyols in the thermoplastic-type foam formulation. Thermoplastic-type flexible polyurethane foams (otherwise known as viscoelastic, VE, foams) typically include foams characterised by an apparent density of 30 kg/m³ to 80 kg/m³, a hardness of 1.0 kPa to 3.0 kPa, an elasticity of no more than 15%, a tensile strength of more than 55 kPa, an elongation strength of more than 90% and a recovery time of 2 to 20 s, where recovery time, also referred to as "relaxation time", refers to the time taken for the foam to recover to 90% of its initial height after being previously compressed to 25% of this height for 60 s.

In general, the process for obtaining a polyether polyol with a bimodal molecular weight distribution according to the invention consists in dividing it into two successive steps, wherein in the first step, the polyaddition of alkylene oxides to a starter is carried out in the presence of a catalyst, and in the second step, the polyaddition of alkylene oxides to a mixture of the polymer formed in the first step and a second portion of the starter is carried out, also in the presence of a catalyst. The process therefore involves fractionating the starter in successive steps of the polyaddition reaction. As indicated, the starter is a chemical compound having active hydrogen atoms, in particular glycerine or trimethylolpropane.

In a preferable variant of implementing the process according to the invention, a catalyst, e.g. KOH, is added to the starter, after which such a mixture is heated to 110-130°C for several (1-5) hours and, under barbotage with an inert gas, e.g. nitrogen, the excess water coming from the starter and from the reaction producing the alkoxide is removed according to the scheme:

R-OH +KOH → R-OK + H₂O

The so prepared mixture of the starter and the catalyst, dried to a water content below 0.05 % by weight, is transferred to a reactor and undergoes a polyaddition reaction with at least one alkylene oxide, preferably selected from ethylene oxide (EO) and propylene oxide (PO), in sequences of block (TP-TE, TE-TP), statistical (TP/TE), mixed: block-statistical (TP -TP/TE, TE -TP/TE) or statistical-block (TP/TE - TE, TP/TE - TP), complex (e.g. TP - TP/TE - TE, TP - TE - TP/TE, TP - TE - TP, TP - TE/TP - TP) types, or, if only EO or PO is used, a homopolymer type (TP, TE) to obtain a specific molecular weight, where TE means a block formed only from EO monomers and TP means a block formed only from PO monomers.

The reaction with alkylene oxides takes place at an elevated temperature, preferably in the range of 115 - 130°C and under a pressure of up to 10 bar. After digesting the reactor and degassing, another fraction of the starter and alkaline catalyst is added to the polymer formed in the first step. After drying, the process of addition of alkylene oxides in defined sequences is continued blockwise, random or block-random. The alkaline catalyst causes the reaction of the alkylene oxides with the starter and the polymer to occur in parallel, yielding a product with a bimodal distribution of molecular weights arising from the alkylene oxides attached to both the starter and the polymer from the first reaction step.

Once the required amount of alkylene oxides is introduced into the reactor, the product, after being digested and degassed, undergoes a process of purification from the catalyst ions by means of one of the commonly used methods using inorganic acids, salts or adsorbents, and filtration. These methods include the use of phosphoric acid as described in US 8,017,814, the use of inorganic mineral acids as described in US 10,131,743 and the use of organic aqueous solutions of salts and acids as described in EP 1303554 B1.

Alternatively and preferably, the bimodal polyether polyols obtained in steps (a)-(c) of the process according to the invention undergo catalyst ion purification in step (d), comprising the following steps:
(d1) neutralising the crude polyether polyol obtained in step (c) by addition to the post-reaction mixture of acid disodium pyrophosphate (Na₂H₂P₂O₇) and water
(d2) lowering the water content in the mixture obtained in step (d1) to less than 0.1% by weight by distillation under reduced pressure
(d3) removing the crystals of alkali metal salts from the mixture obtained in step (d2)c) by filtration in a pressure filter to obtain a polyether polyol having an alkali metal ions content not higher than 5 ppm.

In step (d1), part of the post-reaction mixture is transferred to a separate mixer and acid disodium pyrophosphate is added thereto, with intensive stirring to prevent solid pyrophosphate from falling down. The suspension so prepared is added to the rest of the post-reaction mixture which is placed in a neutraliser. Then, with intensive stirring, water in an amount of 0.5% - 1% by weight of the total weight of the neutralised polyether polyol, preferably in an amount of 0.7% - 0.8% by weight, is dosed. The completion of neutralisation is indicated by a positive result of the analysis of colour change to yellow in the acidity indicator (isopropanol-water 2:1 solution with bromothymol blue).

In a next step (d2), the water content of the mixture obtained in the neutralisation step (d1) is reduced to a level below 0.1% by weight, preferably below 0.05% by weight by distillation under reduced pressure, preferably with simultaneous sparging with nitrogen .

In step (d3), the mixture obtained in step (d2) is then filtered through a pressure filter. Preparation of the filter for filtration consists in preparing a suspension of filter aid (diatomaceous earth) in dehydrated polyether polyol in a mixer and applying a filter layer to the filtering elements of the filter, and then filtering the polyether polyol to an alkali metal ions content not higher than 5 ppm.

Determination of alkali metal ions, preferably K⁺ and Na⁺ was performed with a BWB-XP flame photometer (manufacturer: BWB Technologies UK Ltd.). This is a multi-channel, low-temperature flame photometer for simultaneous determination of Na, K, Li, Ca, Ba.

Bimodal polyether polyols obtained in the process according to the invention with a weight average molecular weight in the range of 4000 - 6000 and an ethylene oxide content in the range of 60 - 85% by weight are used in the preparation of flexible polyurethane foams, in particular of soft, hypersoft and thermoplastic types.

Compared to their unimodal counterparts on the market, the bimodal polyol polyethers obtained according to the invention are characterised by a lower pouring point allowing a wider temperature range to be used in processing and have better cell opening properties.

### Brief Overview of the Drawing

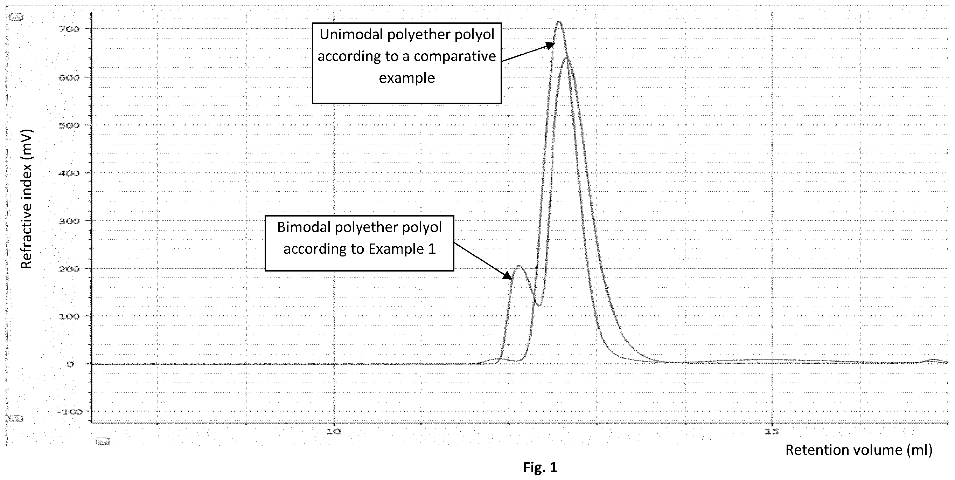

The invention in an embodiment is illustrated in the drawing, in which Fig. 1 shows a chromatogram of a typical unimodal polyether polyol from the state of the art and a bimodal polyether polyol according to the invention.

### Examples

Reference example: preparation of a unimodal polyether polyol with a weight average molecular weight Mw of 5000 Da:
3.5 kg of glycerine and 0.18 kg of a 50% KOH solution were added to the preparator. After purging the reaction vessel with nitrogen under continuous stirring, the contents were heated to 110°C for 3 hours and then, after starting the nitrogen sparging and connecting to a vacuum system, the water was distilled to 0.04% by weight. The so prepared mixture of the starter and the catalyst was transferred to the reactor previously purged with nitrogen, nitrogen was added to a pressure of 1 bar and 24.9 kg of propylene oxide was introduced at a temperature of 115°C. After stabilising the pressure and degassing the reactor, 5.8 kg of ethylene oxide was added at a temperature of 130°C. The crude polyether polyol was transferred to the neutraliser and degassed under vacuum from volatile components. A part of the polyether polyol (10% by weight) was transferred to a separate mixer, to which 0.24 kg of acid disodium pyrophosphate (Na₂H₂P₂O₇) was added. The pyrophosphate suspension formed was transferred to the neutraliser with the remaining polyether polyol. After intensive stirring, 0.20 kg of demineralised water was gradually introduced. The neutralised polyether polyol was distilled under reduced pressure in order to remove water to a level of 0.04% by weight in the product, and then, after preparing a suspension of filter aid (Dicalite) in polyether polyol in the mixer and applying a filter layer on the filter, thereby obtaining polyether polyol with a hydroxyl number LOH = 34 [mg KOH/g]. 3000 ppm of the antioxidant Irganox 1076 [octadecyl 3-(3,5-di-tert-butyl-4-hydroxyphenyl)propionate, CAS 2082-79-3] was added to the purified product.

### Example 1: preparation of a bimodal polyether polyol with a weight average molecular weight of 5000 Da.

0.05 kg of glycerine and 0.0147 kg of a 50% KOH solution were added to the preparator. After purging the reaction vessel with nitrogen under continuous stirring, the contents were heated to 110°C for 3 hours and then, after starting the nitrogen sparging and connecting to a vacuum system, the water was distilled to 0.04% by weight. The so prepared mixture of the starter and the catalyst was transferred to the reactor previously purged with nitrogen, nitrogen was added to a pressure of 1 bar and 0.24 kg of propylene oxide was introduced at a temperature of 115°C. After stabilising the pressure, 2.2 kg of propylene oxide-ethylene oxide mixture was added at a temperature of 130°C. After digestiing the contents of the reactor, a second part of the starter = glycerine in an amount of 0.435 kg and the catalyst = KOH was added. Water was then distilled to a content of 0.05 % and 19.5 kg of a mixture of propylene oxide and ethylene oxide in a proportion of 30:70% by weight was introduced. After digesting the reactor contents, 4.5 kg of ethylene oxide was added. The crude polyether polyol was transferred to the neutraliser and degassed under vacuum from volatile components. A part of the polyether polyol (3 kg) was transferred to a separate mixer, to which 0.225 kg of acid disodium pyrophosphate was added. The pyrophosphate suspension formed was transferred to the neutraliser with the remaining polyether polyol. After intensive stirring, 0.20 kg of demineralised water was gradually introduced. The neutralized polyether polyol was distilled under reduced pressure in order to remove water to a level of 0.04% by weight in the product, and then, after preparing a suspension of filter aid (Dicalite) in polyether polyol in the mixer and applying a filter layer on the filter, was filtered, thereby obtaining polyether polyol with a hydroxyl number LOH = 34 [mg KOH/g]. 3000 ppm of Irganox 1076 antioxidant was added to the purified product.

A comparative chromatographic analysis of the bimodal product obtained in Example 1 and a typical unimodal polyether polyol having a weight average molecular weight Mw of 5000 obtained in the reference example was carried out. The chromatogram is shown in Fig. 1. The analysis was carried out on a Malvern System Omnisec gel chromatograph coupled to an integrated RID (refractometric), Visco (viscometric), LALS+RALS (light scattering) detector system. Two PLgel 3 µm Mixed-E 300 x 7.5 mm columns connected in series from Agilent Technologies were used. The mobile phase was tetrahydrofuran stabilised with dibutylhydroxytoluene (BHT).

### Example 2: use of the bimodal polyether polyol according to the invention for the production of polyurethane (PU)

The bimodal polyether polyol obtained in Example 1 was used in a polyurethane formulation with a conventional polyol, yielding PU having the properties given in Table 1 below.

**Table 1: Properties of polyurethanes obtained in Example 2**

| Sample symbol | T2315 | HS2110 | HS2310 | HS3010 | HS4015 |
|---|---|---|---|---|---|
| *Polyol component* | | | | | |
| Standard polyol (F3600)^{(a)} [parts by weight per 100 parts by weight of the total polyol components] | 90 | 25 | 25 | 25 | 25 |
| Bimodal polyol of Example 1 [parts by weight per 100 parts by weight of the total polyol components] | 10 | 75 | 75 | 75 | 75 |
| T80 index | 97 | 100 | 100 | 100 | 98 |
| T80 ^{(b)} [parts by weight per 100 parts by weight of the total polyol components] | 50 | 49.5 | 42.80 | 33.19 | 24.5 |
| Water [parts by weight per 100 parts by weight of the total polyol components] | 4.55 | 4.55 | 3.85 | 2.80 | 2 |
| TEGOSTAB^{®} BF 2370 silicone surfactant (Evonik) [parts by weight per 100 parts by weight of the total polyol components] | 1 | 1.5 | 1.20 | 1.00 | 1.3 |
| A1 (amine catalyst)^{(c)} [parts by weight per 100 parts by weight of the total polyol components] | 0-0.03 | 0-0.05 | 0-0.05 | 0-0.05 | 0.05 |
| A33 (amine catalyst)^{(d)} [parts by weight per 100 parts by weight of the total polyol components] | 0.15 | 0.3-0.35 | 0.3-0.35 | 0.32 | 0.38 |
| SO (tin octanoate) [parts by weight per 100 parts by weight of the total polyol components] | 0.24 | 0.03 | 0.02 | 0.03 | 0.05 |
| Apparent density [kg/m³] | 22.4 | 20.8 | 22.7 | 29.3 | 38.9 |
| Hardness [kPa] | 1.58 | 0.95 | 1.08 | 1.1 | 1.55 |
| Resilience [%] | 46 | 40 | 41 | 47 | 49 |
| ^{(a)} polyether polyol, glycerine-based block-statistical copolymer of ethylene oxide and propylene oxide [Rokopol^{®} F3600 from PCC Rokita, hydroxyl number 48 mg KOH/g; dynamic viscosity in the range of 540-620 mPas] | | | | | |
| ^{(b)} a mixture of 2,4-diisocyanatoluene (2,4-TDI) and 2,6-diisocyanatoluene (2,6-TDI) in a ratio of 80:20 [Desmodur T80 (Covestro AG)]. | | | | | |
| ^{(c)} 70% solution of bis(2-dimethylaminoethyl)ether [BDMAEE] (CAS 3033-62-3) in dipropylene glycol - Niax^{™} catalyst A-1 | | | | | |
| ^{(d)} 33% solution of triethylenediamine/1,4-diazabicyclo[2.2.2]octane [DABCO] 280-57-9) - Niax^{™} catalyst A-33 | | | | | |

The parameters characterising the samples obtained according to Example 2 were determined according to the following standards/methods:
Density: determined according to PN -EN ISO 845 /October 2000 "Cellular plastics and rubbers - Determination of apparent (columetric) density".

Description: a sample measuring 10 cm x 10 cm and 5 cm high is measured with a caliper and weighed.

Hardness: determined according to PN-EN ISO 2439 "Flexible cellular polymeric materials - Determination of hardness (indentation technique)".

Resilience: determined according to PN -EN ISO 8307 /October 2000 "Flexible cellular polymeric materials - Determination of resilience".

## Claims

1. A process for obtaining a polyether polyol with a bimodal molecular weight distribution, **characterised in that** it comprises the following steps:
(a) carrying out, in a reactor, polyaddition of at least one alkylene oxide selected from ethylene oxide and propylene oxide to a starter, which is a triol or a mixture of triols, in the presence of a catalyst which is an alkali metal hydroxide or its alkoxide, to obtain the polymer,
(b) digesting and degassing of the reactor,
(c) introducing, into the same reactor, a second portion of the starter, catalyst and at least one alkylene oxide and carrying out the polyaddition of this at least one alkylene oxide to the polymer mixture obtained in step (a) and the second portion of the starter.

2. The process according to claim 1, wherein the ether polyol obtained in step (c) is then purified from catalyst ions in step (d).

3. The process according to claim 2, wherein the purification in step (d) comprises the following steps:
(d1) neutralising the crude polyether polyol obtained in step (c) by addition, to the post-reaction mixture, of acid disodium pyrophosphate (Na₂H₂P₂O₇) and water
(d2) lowering the water content in the mixture obtained in step (d1) to less than 0.1% by weight by distillation under reduced pressure
(d3) removing the crystals of alkali metal salts from the mixture obtained in step (d2) by filtration in a pressure filter to obtain a polyether polyol having an alkali metal ion content not higher than 5 ppm.

4. The process according to any one of claims 1-3, wherein the starter is selected from glycerol and trimethylpropane (TMP) or a mixture thereof.

5. The process according to any one of claims 1-4, wherein the catalyst is selected from NaOH, KOH, CsOH or alkoxides thereof.

6. The process according to any one of claims 1-5, wherein, before step (a) a mixture of the starter and the catalyst is prepared by stirring the components at a temperature of 100-130°C for 1-5 h under an inert gas atmosphere and then by removing water to a content below 0.05% by weight.

7. The process according to any one of claims 1-6, wherein, in total, in steps (a) and (c), the catalyst is used in an amount of 1000-5000 ppm, preferably in an amount of 2000-3000 ppm.

8. A polyether polyol with a bimodal molecular weight distribution, obtainable in the process according to any one of claims 1-7.

9. The polyether polyol according to claim 8, **characterised in that** it has a weight average molecular weight of 4000 - 6000 Da and contains from 60 to 85% by weight of ethylene oxide.

10. The use of the polyether polyol having a bimodal molecular weight distribution as defined in claim 8 or 9 for producing soft-type flexible polyurethane foams, wherein this polyether polyol is used in an amount of 0.5 to 15 parts by weight per 100 parts by weight of all polyols in the soft-type foam formulation.

11. The use of the polyether polyol having a bimodal molecular weight distribution as defined in claim 8 or 9 for producing hypersoft-type flexible polyurethane foams, wherein this polyether polyol is used in an amount of 70 to 85 parts by weight per 100 parts by weight of all polyols in the hypersoft-type foam formulation.

12. The use of the polyether polyol having a bimodal molecular weight distribution as defined in claim 8 or 9 for producing thermoplastic-type flexible polyurethane foams, wherein this polyether polyol is used in an amount of 3 to 55 parts by weight per 100 parts by weight of all polyols in the thermoplastic-type foam formulation.
